(19) Europäisches Patentamt
European Patent Office
Office européen des brevets

(11) **EP 2 927 153 B1**

(12) **EUROPEAN PATENT SPECIFICATION**

(45) Date of publication and mention of the grant of the patent:
**14.11.2018 Bulletin 2018/46**

(21) Application number: **13859358.7**

(22) Date of filing: **27.11.2013**

(51) Int Cl.:
**B65D 65/40** (2006.01)      **B32B 27/34** (2006.01)
**B32B 15/20** (2006.01)      **B32B 15/08** (2006.01)
**B32B 15/088** (2006.01)

(86) International application number:
**PCT/JP2013/081884**

(87) International publication number:
**WO 2014/084248 (05.06.2014 Gazette 2014/23)**

(54) **PACKAGING MATERIAL FOR COLD FORMING AND PRESS-THROUGH PACK FORMED USING SAME**

VERPACKUNGSMATERIAL ZUM KALTFORMEN UND DAMIT GEFORMTE DURCHDRÜCKPACKUNG

MATÉRIAU D'EMBALLAGE DESTINÉ AU FORMAGE À FROID ET PAQUET EXPULSÉ PAR PRESSION FORMÉ EN L'UTILISANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.11.2012  JP 2012261785**

(43) Date of publication of application:
**07.10.2015  Bulletin 2015/41**

(73) Proprietor: **UNITIKA LTD.**
**Amagasaki-shi**
**Hyogo 660-0824 (JP)**

(72) Inventors:
• **NANJO, Kazunari**
  **Uji-shi, Kyoto 611-0021 (JP)**
• **HAMADA, Toshiya**
  **Uji-shi, Kyoto 611-0021 (JP)**
• **MATSUMOTO, Masami**
  **Uji-shi, Kyoto 611-0021 (JP)**
• **TANAKA, Nobuhiro**
  **Osaka-shi, Osaka 541-8566 (JP)**

(74) Representative: **Vigand, Philippe et al**
**Novagraaf International SA**
**Chemin de l'Echo 3**
**1213 Onex - Genève (CH)**

(56) References cited:
**EP-A1- 2 058 106      EP-A1- 2 858 138**
**JP-A- H05 318 567      JP-A- 2001 176 459**
**JP-A- 2004 058 515      JP-A- 2008 044 209**
**JP-A- 2011 051 120      JP-A- 2011 255 931**
**JP-A- 2011 255 931**

**Description**

Technical Field

The present invention relates to a packaging material for cold forming and a press-through pack using the same.

Background Art

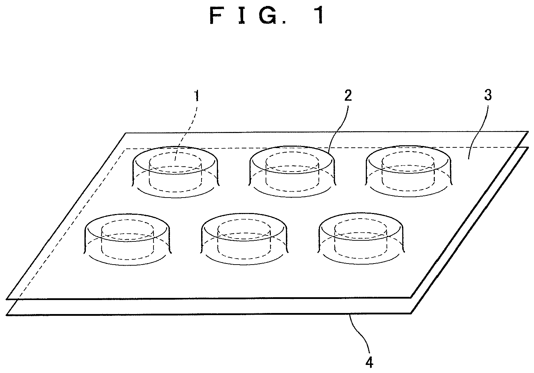

Packaging materials for cold forming have hitherto been widely used for packages (press-through packs) of medicaments (tablets) and the like. As shown in FIG. 1, a press-through pack includes a container 3 having a plurality of cavities 2 to retain medicaments 1 or the like, and a thin-film-like lid member 4 to collectively close the openings of the plurality of cavities.

Recently, aluminum foil has been used as the material for the container 3 in order to enhance the preservability of medicaments by imparting gas barrier property or moisture proofness to the container 3. However, aluminum foil itself is poor in formability and tends to be broken. Accordingly, the use of a laminated sheet obtained by laminating a biaxially stretched polyamide resin film on one surface of an aluminum foil as the material for the container 3 has been proposed (Patent Literature 1).

A container is obtained by pressing the laminated sheet from the aluminum foil side in a normal temperature environment, namely, by cold forming the laminated sheet. When an aluminum foil is used for the lid member 4, a heat seal layer including a heat adhesive resin such as polyvinyl chloride is formed on the surface opposite to the polyamide resin film side surface of the aluminum foil in the laminated sheet.

In Patent Literature 1, a tubular method is used as a stretching method of a polyamide resin film; examples of the stretching method of a polyamide resin film other than the tubular method include a tenter method. The tenter method is more advantageous as compared with the tubular method with respect to productivity.

Citation List

Patent Literature

Patent Literature 1: JP2011-255931A

Summary of Invention

Technical Problem

However, the tenter method finds difficulty in obtaining satisfactory balance (distortion balance) between longitudinal and transverse physical properties as compared with the tubular method. Accordingly, the aluminum foil tends to be broken in the vicinities of the peripheries of the bottoms in the cavities of the container during the cold forming of the laminated sheet for forming the plurality of cavities by pressing the laminated sheet including a polyamide resin film stretched by the tenter method, from the aluminum foil side, in a normal temperature environment.

More specifically, when the distortion (the elongation rate during tensile straining) is excessively small at least in one direction of the longitudinal direction and the transverse direction of the polyamide resin film, during the cold forming of the laminated sheet, the polyamide resin film is excessively hardly elongated, and tends to be broken. The aluminum foil tends to be broken with the breakage of the polyamide resin film. When the distortion (the elongation rate during tensile straining) is excessively large at least in one direction of the longitudinal direction and the transverse direction of the polyamide resin film, during the cold forming of the laminated sheet, the polyamide resin film excessively tends to be elongated, and thus the aluminum foil tends to be broken.

Consequently, the cold formability is unfortunately low.

Additionally, no sufficient investigation has yet been performed on the relevance with respect to the cold formability between the polyamide resin film and the aluminum foil.

Accordingly, for the purpose of solving the above-described conventional problems, an object of the present invention is to provide a packaging material for cold forming excellent in cold formability, capable of suppressing the breakage of the aluminum foil during the cold forming in the case where a polyamide resin film biaxially stretched by the tenter method is used. Another object of the present invention is to provide a highly reliable press-through pack using the foregoing packaging material for cold forming.

Solution to Problem

The gist of the present invention is as follows.

(1) A packaging material for cold forming including a polyamide resin film biaxially stretched based on a tenter method and an aluminum foil provided on one surface of the polyamide resin film and integrated with the polyamide resin film, wherein the stretching magnification factor in the transverse direction (TD magnification factor) and the stretching magnification factor in the longitudinal direction (MD magnification factor) of the polyamide resin film are 2 or more and less than 3, wherein the distortion of the polyamide resin film caused by applying thereto a tension corresponding to the tensile break tension of the aluminum foil is 20% or more and 45% or less in both longitudinal direction (MD) and transverse direction (TD).

(2) The packaging material for cold forming according to (1), further including an adhesive layer formed between the polyamide resin film and the aluminum foil.

(3) A press-through pack using the packaging material for cold forming according to (1) or (2).

Advantageous Effects of Invention

According to the present invention, it is possible to provide a packaging material for cold forming excellent in cold formability, capable of suppressing the breakage of the aluminum foil during cold forming in the case where the polyamide resin film biaxially stretched by a tenter method is used. By using the packaging material for cold forming, a highly reliable press-through pack can be provided.

Brief Description of Drawing

[FIG. 1] FIG. 1 is an exploded perspective view of a common press-through pack.

Description of Embodiments

The packaging material (laminated sheet) of the present invention is constituted with at least a polyamide resin film biaxially stretched by a tenter method, and an aluminum foil provided on one surface of the polyamide resin film and integrated with the polyamide resin film.

In the present invention, the distortion (hereinafter, simply referred to as the distortion A) of the polyamide resin film caused by applying thereto a tension corresponding to the tensile break tension of the aluminum foil is required to fall within a range from 20 to 45%. The foregoing distortion A means the distortion of the polyamide resin film after the biaxial stretching of the polyamide resin film by the tenter method and before the integration of the polyamide resin film with the aluminum foil.

The present inventors paid attention to the relation between the tensile break tension of the aluminum foil and the distortion (the elongation rate during tensile straining) of the polyamide resin film. Consequently, the present inventors have discovered that in the case where the distortion A falls within the foregoing range, when the laminated sheet is pressed from the aluminum foil side to form a plurality of cavities in a normal temperature environment, the breakage of the aluminum foil in the vicinities of the peripheries of the bottoms in the cavities of the container is suppressed, and thus the cold formability is drastically improved. Here, the tensile break tension means the tensile load at the time of the breakage of a film shaped or foil-shaped sample (15 mm in width) in a tensile test.

The packaging material of the present invention is excellent in cold formability, the aluminum foil is not broken during cold forming and thus a highly reliable container can be obtained. The packaging material for cold forming of the present invention is suitably used for a press-through pack provided with a container having a plurality of cavities each retaining a medicament or the like.

When the distortion A exceeds 45%, the polyamide resin film tends to be excessively elongated, and the aluminum foil tends to be broken. When the distortion A is less than 20%, the polyamide resin film tends to be excessively hardly elongated, the cold forming itself is difficult, the polyamide resin film is broken during forming, and the aluminum foil tends to be broken with the breakage of the polyamide resin film.

It is possible to suppress the locally large deformations in the vicinities of the peripheries of the bottoms in the cavities of the container, and hence the distortion A is preferably 25 to 45% and more preferably 30 to 40%.

The distortion A (%) represents the elongation rate due to tensile straining of the biaxially stretched polyamide resin film, and is determined on the basis of the following formula:

$$\text{Distortion A (\%) = (dimension after tensile straining}$$
$$\text{- dimension before tensile straining)/(dimension before}$$
$$\text{tensile straining)} \times 100$$

In the foregoing formula, the dimension is the dimension of the biaxially stretched polyamide resin film in the longitudinal direction (MD) or the transverse direction (TD) thereof. For example, the distortion A (%) in the longitudinal direction is given by (dimension in longitudinal direction after tensile straining - dimension in longitudinal direction before tensile straining)/(dimension in longitudinal direction before tensile straining) × 100, and the distortion A (%) in the transverse direction is given by (dimension in transverse direction after tensile straining - dimension in transverse direction before tensile straining)/(dimension in transverse direction before tensile straining) × 100.

In the present invention, the distortion A is required to fall within a range from 20 to 45% both in the longitudinal direction (MD) and in the transverse direction (TD). As long as the following distortions A fall within the foregoing range, the distortion A in the longitudinal direction and the distortion A in the transverse direction may be different from each other. From the viewpoint of the balance between the physical properties (strengths), the distortion A in the longitudinal direction is preferably approximately the same as the distortion A in the transverse direction.

Polyamide resin is constituted with polymers formed by forming amide bonds between a plurality of monomers. Examples of polyamide resin include nylon 6, nylon 66, nylon 11, nylon 12, nylon 610 and nylon 612. Among these, nylon 6 is preferable from the viewpoint of cold formability, productivity and strength.

The polyamide resin preferably has a relative viscosity (20°C) of 2.0 to 3.5. When the relative viscosity of the polyamide resin exceeds 3.5, the pressure loss in the filtration of the molten resin is large, an excessive ejection energy is needed, and the production cost is raised. When the relative viscosity of the polyamide resin is less than 2.0, the tensile strength and the impact strength tend to be decreased. The relative viscosity as referred to herein means the value obtained when the viscosity of a sample solution (solution temperature: 20°C) prepared by dissolving a polymer in 96% sulfuric acid in a concentration of 1.0 g/dL is measured by using a predetermined viscometer (for example, an Ubbelohde type viscometer).

From the viewpoint of the cold formability of the packaging material and the sizes (diameter and depth dimension) of the cavities to retain medicaments or the like, the thickness T1 of the biaxially stretched polyamide resin film is preferably 12 to 30 $\mu$m and more preferably 15 to 30 $\mu$m. The thickness T1 of the polyamide resin film being 12 $\mu$m or more prevents the breakage of the polyamide resin film during cold forming. The thickness T1 of the polyamide resin film being 30 $\mu$m or less facilitates the cold forming of the cavities.

The aluminum foil may be either a foil of aluminum as a single substance or a foil of an aluminum alloy. The aluminum alloy includes small amounts or trace amounts of foreign elements in addition to aluminum as the main component. Examples of the foreign elements include: Fe, Si, Cu, Ni, Cr, Ti, Zr, Zn, Mn, Mg and Ga. These may be used each alone or in combinations of two or more thereof. Fe is preferable among these from the viewpoint of cold formability.

From the viewpoint of the cold formability of the packaging material and the sizes (diameter and depth) of the cavities to retain medicaments or the like, the thickness T2 of the aluminum foil is preferably 20 to 60 $\mu$m and more preferably 30 to 50 $\mu$m. The thickness T2 of the aluminum foil being 20 $\mu$m or more suppresses the breakage of the aluminum foil during cold forming. The thickness T2 of the aluminum foil being 60 $\mu$m or less facilitates the cold forming of the cavities.

From the viewpoint of the cold formability and the strength of the packaging material, the ratio T1/T2 of the thickness T1 of the polyamide resin film to the thickness T2 of the aluminum foil is preferably 0.4 to 1.0 and more preferably 0.4 to 0.8.

An adhesive layer is preferably formed between the polyamide resin film and the aluminum foil. A packaging material is obtained in which the polyamide resin film and the aluminum foil securely adhere to each other.

The adhesive layer is formed by using, for example, a reaction-type adhesive. Because an adhesive layer excellent in adhesiveness and flexibility is obtained, it is preferable to use a two-component polyurethane-based adhesive as the reaction-type adhesive. In the two-component polyurethane-based adhesive, a polyol-based main component such as polyester polyol or polyether polyol and a polyisocyanate-based curing agent such as an aliphatic polyisocyanate or an aromatic polyisocyanate are used.

From the viewpoint of the cold formability of the packaging material and the adhesiveness between the polyamide resin film and the aluminum foil, the adhesive layer formed between the polyamide resin film and the aluminum foil preferably has a thickness of 0.2 to 5 $\mu$m.

On the surface opposite to the surface adhering to the polyamide resin film in the aluminum foil, a below-described heat seal layer allowing the container obtained by cold forming the packaging material and a lid member to adhere to each other by heat adhesion is preferably provided. The heat seal layer is formed of, for example, polyvinyl chloride, polyethylene or polypropylene. Among these, polyvinyl chloride is more preferable from the viewpoint of formability and moisture proofness.

It is also preferable to form the same adhesive layer as described above between the aluminum foil and the heat seal layer. Thus, a packaging material is obtained in which the aluminum foil and the heat seal layer securely adhere to each other.

From the viewpoint of the cold formability of the packaging material and the adhesiveness between the aluminum foil and the heat seal layer, the adhesive layer formed between the aluminum foil and the heat seal layer preferably has a thickness of 0.2 to 5 $\mu$m.

The method for producing the biaxially stretched polyamide resin film of the present invention may include, for example, a step of a heretofore known relaxation treatment (a thermosetting treatment or a relaxation treatment), in addition to the biaxially stretching step based on a tenter method.

The biaxial stretching based on the tenter method may be either a simultaneous biaxial stretching simultaneously performing a stretching step in the longitudinal direction and a stretching step in the transverse direction, or a successive biaxial stretching first performing a stretching step in the longitudinal direction and then performing a stretching step in the transverse direction. In the successive biaxial stretching, stretching may be performed by a tenter method both in the longitudinal direction and in the transverse direction, or alternatively, stretching may be first performed by a roll method in the longitudinal direction and may be then performed by a tenter method in the transverse direction.

The distortion A can be regulated by varying, for example, the stretching magnification factors (TD magnification factor and MD magnification factor) of the polyamide resin film, the thermosetting temperature in the thermosetting treatment following the stretching, and the relaxation rate in the relaxation treatment. For example, the increase or decrease of the longitudinal direction and/or transverse direction stretching magnification factor decreases or increases the distortion A in the longitudinal direction and/or the distortion A in the transverse direction. For example, the increase or decrease of the thermosetting temperature increases or decreases the distortion A. For example, the increase or decrease of the relaxation rate decreases or increases the distortion A.

In the cases of the stretching magnification factors and the relaxation rates, the distortion A in the longitudinal direction and the distortion A in the transverse direction can be individually and separately regulated. In the case of the thermosetting temperature, the distortion A in the longitudinal direction and the distortion A in the transverse direction can be both simultaneously regulated.

Alternatively, the distortion A may also be regulated by varying the thickness of the aluminum foil.

The stretching magnification factors (TD magnification factor and MD magnification factor) of the polyamide resin film are 2 or more and less than 3 and more preferably 2.5 or more and less than 3.0. When the stretching magnification factors are 3 or more, a commonly used value, the distortion A is made too small, and accordingly the aluminum foil sometimes tends to be broken or sometimes tends to undergo delamination during forming. When the stretching magnification factors are less than 2, the thickness uniformity of the polyamide resin film is impaired, and accordingly large deformation sometimes occurs locally during forming to break the aluminum foil.

The press-through pack of the present invention uses the above-described packaging material. More specifically, the press-through pack of the present invention includes a container having a plurality of cavities (retaining sections) obtained by pressing (cold forming) the packaging material from the aluminum foil side, and a thin-film-like lid member to collectively close the openings of the plurality of cavities in the container. The packaging material undergoes cold forming in such a way that the aluminum foil is disposed on the inside face side (lid member side) of the container. As the lid member, for example, an aluminum foil is used. For example, the press-through pack is obtained by bonding the container and the lid member to each other, through the intermediary of the heat seal layer formed on one surface of the container.

Examples of the molding method of the container include a plug-assist forming. The cavities are, for example, of an approximately columnar shape (diameter: 5 to 20 mm, depth: 2 to 8 mm). The plurality of cavities are arranged, for example, at a constant interval of 6 to 20 mm. The cavities may also be of an approximately elliptic columnar shape.

Examples

Hereinafter, Examples of the present invention are described in detail; however, the present invention is not limited to these Examples.

[Evaluations]

(A) Measurement of Tensile Break Tension of Aluminum Foil

A sample was prepared, the measurement method of the tensile strength at break according to JIS K 6732 was used, and the tensile load at the time of the breakage of the sample was normalized not with the cross sectional area of the sample but with the width of the sample to derive the tensile break tension (N/15 mm).

The sample width was set at 15 mm, and the tensile speed was set at 100 mm/min.

(B) Measurement of Distortion A of Biaxially Stretched Polyamide Resin Film

A sample for applying the tensile load in the longitudinal direction and a sample for applying the tensile load in the transverse direction were prepared. The width of each of the samples was set at 15 mm. The tensile load corresponding to the tensile break tension of the aluminum foil determined above was applied to each of the polyamide resin films. In this case, the longitudinal direction dimensions and the transverse direction dimensions of the biaxially stretched polyamide resin film before and after the tensile straining were measured, and the distortion A (%) in the longitudinal direction and the distortion A (%) in the transverse direction were derived on the basis of the following formula:

```
Distortion A (%) = (dimension after tensile straining
- dimension before tensile straining)/(dimension before
tensile straining) × 100
```

(C) Evaluation of Formability of Packaging Material

The formability of a packaging material (laminated sheet) was evaluated by performing the cold forming of the packaging material (laminated sheet) from a PVC film side with the 1-ton desktop servo press (SBN-1000, manufactured by Yamaoka Seisakusho Co., Ltd.). For the evaluation, a die having a size of 115 mm × 115 mm was used, the forming speed was set at 50 mm/sec, and the draw depth was set at 6 mm.

In this case, the occurrence or non-occurrence of the breakage of the aluminum foil, the occurrence or non-occurrence of the breakage of the polyamide resin film and the occurrence or non-occurrence of delamination were verified. The case where at least one of the aluminum foil and the polyamide resin film in the packaging material was broken and/or the delamination occurred was evaluated as "poor," and the case where either of the aluminum foil and the polyamide resin film in the packaging material was free from breakage and the delamination did not occur was evaluated as "good."

Example 1

(1) Preparation of Biaxially Stretched Polyamide Resin Film

An unstretched polyamide resin film (thickness: 190 μm) was successively biaxially stretched. Specifically, the polyamide resin film was stretched at 60°C in the longitudinal direction (MD) with a magnification factor of 2.8 by a roll method, and then stretched at 90°C in the transverse direction (TD) with a magnification factor of 2.8 by a tenter stretching method. As the polyamide resin, A1030BRF (relative viscosity (20°C): 3.0) manufactured by Unitika Ltd. was used. Subsequently, the stretched polyamide resin film was subjected to a thermosetting treatment at a temperature of 203°C, and further subjected to a relaxation treatment in the TD direction with a relaxation rate regulated at 5%. In this case, the distortions A in the longitudinal and transverse directions were found to have the values shown in Table 1. Thus, a 25-μm-thick successively biaxially stretched polyamide resin film was prepared.

(2) Preparation of Packaging Material

The biaxially stretched polyamide resin film obtained above was bonded to one surface of an aluminum foil (thickness: 30 μm) by using an adhesive, and a polyvinyl chloride (PVC) film (thickness: 60 μm) for heat adhesion was bonded to the other surface of the aluminum foil. In the above-described bonding, a material prepared by adding an appropriate amount of methyl ethyl ketone to a polyurethane-based adhesive was used. In the polyurethane-based adhesive, 100 parts by mass of a polyol-based main component (TM-K55, manufactured by Toyo-Morton, Ltd.) and 10.5 parts by mass of a polyisocyanate-based curing agent (CAT-10L, manufactured by Toyo-Morton, Ltd.) were used. By the application of the polyurethane-based adhesive, adhesive layers (thickness: 3 μm) were formed between the polyamide resin film and the aluminum foil and between the aluminum foil and the PVC film, respectively. Thus, a packaging material (laminated sheet) was prepared.

Example 2

A packaging material was prepared in the same manner as in Example 1 except that the thickness of the aluminum foil was altered to 40 $\mu$m. The distortions A in the longitudinal and transverse directions were found to have the values shown in Table 1.

Example 3 (not belonging to the invention)

A packaging material was prepared in the same manner as in Example 2 except that the stretching magnification factor in the transverse direction was regulated to be 3.6, and the thermosetting temperature was regulated at 185°C. The distortion A in the transverse direction was found to have the value shown in Table 1.

Example 4 (not belonging to the invention)

A packaging material was prepared in the same manner as in Example 2 except that the stretching magnification factor in the longitudinal direction was regulated to be 3.0. The distortion A in the longitudinal direction was found to have the value shown in Table 1.

Example 5 (not belonging to the invention)

A packaging material was prepared in the same manner as in Example 3 except that the thermosetting temperature was regulated at 195°C, and the relaxation rate was regulated to be 7%. The distortion A in the longitudinal direction was found to have the value shown in Table 1.

Example 6

An unstretched polyamide resin film (thickness: 190 $\mu$m) was simultaneously biaxially stretched. Specifically, the unstretched polyamide resin film was subjected to a water absorption treatment so as to have a water content of 4%, and then stretched at 180°C in the longitudinal direction (MD) with a magnification factor of 2.8 and in the transverse direction (TD) with a magnification factor of 2.8 by a linear motor-type tenter stretching method.
Subsequently, the stretched polyamide resin film was subjected to a thermosetting treatment at a temperature of 203°C, and subjected to a relaxation treatment in the TD direction with a relaxation rate regulated at 5%. In this case, the distortions A in the longitudinal and transverse directions were found to have the values shown in Table 1.
Thus, a 25-$\mu$m-thick simultaneously biaxially stretched polyamide resin film was prepared.
A packaging material was prepared in the same manner as in Example 2 except that the biaxially stretched polyamide resin film obtained above was used.

Comparative Example 1

A packaging material was prepared in the same manner as in Example 1 except that the thickness of the aluminum foil was altered to 20 $\mu$m. The distortions A in the longitudinal and transverse directions were found to have the values shown in Table 1.

Comparative Example 2

A packaging material was prepared in the same manner as in Example 2 except that the stretching magnification factor in the transverse direction was regulated to be 3.4, and the thermosetting temperature was regulated at 211°C. The distortion A in the longitudinal direction was found to have the value shown in Table 1.

Comparative Example 3

A packaging material was prepared in the same manner as in Example 2 except that as the 25-$\mu$m-thick simultaneously biaxially stretched polyamide resin film, "BONYL RX-25," trade name (stretched by a tubular method) manufactured by KOHJIN Film & Chemicals Co., Ltd. was used. The distortions A in the longitudinal and transverse directions were found to have the values shown in Table 1.

Comparative Example 4

A packaging material was prepared in the same manner as in Example 4 except that the thickness of the unstretched polyamide resin film was set at 120 μm. The distortions A in the longitudinal and transverse directions were found to have the values shown in Table 1.

Comparative Example 5

A packaging material was prepared in the same manner as in Comparative Example 4 except that the thickness of the aluminum foil was set at 60 μm. The distortions A in the longitudinal and transverse directions were found to have the values shown in Table 1.

Comparative Example 6

A packaging material was prepared in the same manner as in Comparative Example 4 except that the thickness of the aluminum foil was set at 20 μm. The distortions A in the longitudinal and transverse directions were found to have the values shown in Table 1.

Comparative Example 7

A packaging material was prepared in the same manner as in Example 3 except that the thickness of the unstretched polyamide resin film was set at 150 μm, and the thickness of the aluminum foil was set at 20 μm. The distortions A in the longitudinal and transverse directions were found to have the values shown in Table 1.
The evaluation results are shown in Table 1.

[Table 1]

| | Aluminum foil | | Biaxially stretched polyamide resin film | | | Thickness ratio T1/T2 | Evaluation of cold formability of packaging material |
| | | | | Distortion A (%) | | | |
| | Thickness T2 (μm) | Tensile break tension (N/15 mm) | Thickness T1 (μm) | Longitudinal direction (MD) | Transverse direction (TD) | | |
|---|---|---|---|---|---|---|---|
| Example 1 | 30 | 35 | 25 | 20 | 23 | 0.83 | Good |
| Example 2 | 40 | 50 | 25 | 36 | 41 | 0.63 | Good |
| Example 3 | 40 | 50 | 25 | 42 | 21 | 0.63 | Good |
| Example 4 | 40 | 50 | 25 | 20 | 35 | 0.63 | Good |
| Example 5 | 40 | 50 | 25 | 37 | 21 | 0.63 | Good |
| Example 6 | 40 | 50 | 25 | 30 | 30 | 0.63 | Good |
| Comparative Example 1 | 20 | 25 | 25 | 9 | 10 | 1.25 | Poor |
| Comparative Example 2 | 40 | 50 | 25 | 61 | 26 | 0.63 | Poor |
| Comparative Example 3 | 40 | 50 | 25 | 15 | 10 | 0.63 | Poor |
| Comparative Example 4 | 40 | 50 | 15 | 33 | 65 | 0.375 | Poor |
| Comparative Example 5 | 60 | 70 | 15 | 50 | 80 | 0.25 | Poor |
| Comparative Example 6 | 20 | 25 | 15 | 12 | 33 | 0.75 | Poor |

(continued)

| | Aluminum foil | | Biaxially stretched polyamide resin film | | | Thickness ratio T1/T2 | Evaluation of cold formability of packaging material |
| --- | --- | --- | --- | --- | --- | --- | --- |
| | Thickness T2 ($\mu$m) | Tensile break tension (N/15 mm) | Thickness T1 ($\mu$m) | Distortion A (%) | | | |
| | | | | Longitudinal direction (MD) | Transverse direction (TD) | | |
| Comparative Example 7 | 20 | 25 | 15 | 25 | 12 | 0.75 | Poor |

As shown in Table 1, good cold formability was obtained in each of the packaging materials of Examples 1 to 6 in each of which the distortion A in the longitudinal direction and the distortion A in the transverse direction each fell within a range from 20 to 45%.

In each of the packaging materials of Comparative Examples 1, 3, 6 and 7 in each of which at least one of the distortion A in the longitudinal direction and the distortion A in the transverse direction was less than 20%, the polyamide resin film was broken during forming, and accordingly the aluminum foil was broken. In each of the packaging materials of Comparative Examples 2, 4 and 5 in each of which at least one of the distortion A in the longitudinal direction and the distortion A in the transverse direction exceeded 45%, the aluminum foil was broken during forming.

**Claims**

1.  A packaging material for cold forming comprising a polyamide resin film biaxially stretched based on a tenter method and an aluminum foil provided on one surface of the polyamide resin film and integrated with the polyamide resin film, wherein the stretching magnification factor in the transverse direction (TD magnification factor) and the stretching magnification factor in the longitudinal direction (MD magnification factor) of the polyamide resin film are 2 or more and less than 3.0,
    wherein a distortion (A) of the polyamide resin film caused by applying thereto a tension corresponding to a tensile break tension of the aluminum foil is 20% or more and 45% or less in both longitudinal direction (MD)and transverse direction (TD),
    the tensile break tension of the aluminum foil is determined by measuring the tensile strength at break of a sample and by normalizing the tensile load at the time of the breakage with the width of the sample to derive the tensile break tension of the aluminum foil, in accordance with the method indicated in the description, and
    the distortion (A) representing the elongation rate due to tensile straining of the biaxially stretched polyamide resin film is determined on the basis of the following formula :

    ```
    Distortion A (%) = (dimension after tensile straining
    - dimension before tensile straining)/(dimension
    before tensile straining) x 100
    ```

    in accordance with the method indicated in the description.

2.  The packaging material for cold forming according to claim 1, further comprising an adhesive layer formed between the polyamide resin film and the aluminum foil.

3.  A press-through pack using the packaging material for cold forming according to claim 1 or 2.

**Patentansprüche**

1.  Verpackungsmaterial zum Kaltformen, umfassend eine Polyamidharzfolie, die durch ein Spannrahmenverfahren biaxial gestreckt wird, und eine Aluminiumfolie, die auf einer Oberfläche der Polyamidharzfolie vorgesehen und mit der Polyamidharzfolie integriert ist,

wobei der Streckvergrößerungsfaktor in der Querrichtung (TD-Vergrößerungsfaktor) und der Streckvergrößerungsfaktor in der Längsrichtung (MD-Vergrößerungsfaktor) der Polyamidharzfolie 2 oder mehr und weniger als 3,0 beträgt, wobei eine Verzerrung (A) der Polyamidharzfolie, verursacht durch Aufbringen einer Spannung entsprechend einer Zugbruchdehnung der Aluminiumfolie darauf, sowohl in der Längsrichtung (MD) als auch in der Querrichtung (TD) 20 % oder mehr und 45 % oder weniger beträgt,
die Zugbruchdehnung der Aluminiumfolie durch Messen der Zugfestigkeit beim Bruch einer Probe und durch Normalisieren der Zugbelastung im Bruchaugenblick mit der Breite der Probe, um die Zugbruchdehnung der Aluminiumfolie abzuleiten, in Übereinstimmung mit dem in der Beschreibung angegebenen Verfahren bestimmt wird, und die Verzerrung (A), die die Ausdehnung aufgrund der Zugbeanspruchung der biaxial gestreckten Polyamidharzfolie darstellt, wird anhand der folgenden Formel bestimmt:

$$\text{Verzerrung A (\%)} = (\text{Abmessung nach Zugbeanspruchung} - \text{Abmessung vor Zugbeanspruchung}) / (\text{Abmessung vor Zugbeanspruchung}) \times 100$$

in Übereinstimmung mit dem in der Beschreibung angegebenen Verfahren.

2. Verpackungsmaterial zum Kaltformen nach Anspruch 1, ferner umfassend eine zwischen der Polyamidharzfolie und der Aluminiumfolie gebildete Klebeschicht.

3. Durchdrückpackung unter Verwendung des Verpackungsmaterials zum Kaltformen nach Anspruch 1 oder 2.

**Revendications**

1. Matériau d'emballage destiné au formage à froid comprenant un film de résine polyamide étiré biaxialement sur la base d'un procédé de traitement sur rame et une feuille d'aluminium placée sur une surface du film de résine polyamide et intégrée au film de résine polyamide,
dans lequel le facteur d'agrandissement par étirage dans la direction transversale (facteur d'agrandissement TD) et le facteur d'agrandissement par étirage dans la direction longitudinale (facteur d'agrandissement MD) du film de résine polyamide sont supérieurs ou égaux à 2 et inférieurs à 3,0,
dans lequel une déformation (A) du film de résine polyamide causée par application sur celui-ci d'une tension correspondant à une tension de rupture en traction de la feuille d'aluminium est supérieure ou égale à 20 % et inférieure ou égale à 45 %, à la fois dans la direction longitudinale (MD) et dans la direction transversale (TD), la tension de rupture en traction de la feuille d'aluminium est déterminée par mesurage de la résistance à la traction à la rupture d'un échantillon et par normalisation de la charge de traction au moment de la rupture avec la largeur de l'échantillon pour calculer la tension de rupture en traction de la feuille d'aluminium, en conformité avec le procédé indiqué dans la description, et
la déformation (A) représentant le taux d'allongement dû à la sollicitation en traction du film de résine polyamide étiré biaxialement est déterminée sur la base de la formule suivante :

$$\text{Déformation A (\%)} = (\text{dimension après sollicitation en traction} - \text{dimension avant sollicitation en traction}) / (\text{dimension avant sollicitation en traction}) \times 100$$

en conformité avec le procédé indiqué dans la description.

2. Matériau d'emballage destiné au formage à froid selon la revendication 1, comprenant en outre une couche adhésive formée entre le film de résine polyamide et la feuille d'aluminium.

3. Emballage à déchirement par pression utilisant le matériau d'emballage destiné au formage à froid selon la revendication 1 ou 2.

F I G. 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011255931 A